# FASCICULE DE BREVET EUROPEEN

(11) **EP 2 858 895 B1**
(45) Date de publication et mention de la délivrance du brevet: **23.03.2016**
(21) Numéro de dépôt: 13733365.4
(22) Date de dépôt: 06.06.2013
(51) Int. Cl.: B64C 7/02, F02K 1/76

(54) **DISPOSITIF DE VERROUILLAGE/DÉVERROUILLAGE POUR CAPOT MONOBLOC D'INVERSEUR DE POUSSÉE DE NACELLE DE TURBORÉACTEUR**
VERRIEGELUNGS-/ENTRIEGELUNGSVORRICHTUNG FÜR EINE EINTEILIGE ABDECKUNG EINER SCHUBUMKEHRVORRICHTUNG EINER TURBODÜSENTRIEBWERKSGONDEL
LOCKING/UNLOCKING DEVICE FOR A ONE-PIECE COVER OF A THRUST REVERSER OF A TURBOJET ENGINE NACELLE

(30) Priorité: 08.06.2012 FR 1255365
(43) Date de publication de la demande: 15.04.2015
(73) Titulaire: Aircelle, 76700 Gonfreville L'Orcher (FR)
(72) Inventeur: CONET, Olivier, F-76210 Gruchet Le Valasse (FR); PUJOL, Rémi, F-87220 Feytiat (FR); JEAN, Michel, F-76290 Montivilliers (FR); THOUEMENT, Jean-François, F-27500 Toutainville (FR)
(74) Mandataire: Gaillarde, Frédéric F. Ch.
(86) Numéro de dépôt international: PCT/FR2013/051300
(87) Numéro de publication internationale: WO 2013/182820

(56) Documents cités:
- EP-A1- 1 298 309
- FR-A1- 2 860 554
- FR-A1- 2 952 908

## Description

La présente invention se rapporte à un ensemble pour turboréacteur d'aéronef.

Un aéronef est mû par plusieurs turboréacteurs logés chacun dans une nacelle. La nacelle présente généralement une structure tubulaire comprenant une entrée d'air en amont du turboréacteur, une section médiane destinée à entourer une soufflante du turboréacteur, une section aval abritant les moyens d'inversion de poussée et destinés à entourer la chambre de combustion de turboréacteur et, généralement terminée par une tuyère d'éjection située en aval du turboréacteur.

Cette nacelle est destinée à abriter un turboréacteur double flux apte à générer par l'intermédiaire des pales de la soufflante en rotation un flux d'air chaud, issu de la chambre de la combustion du turboréacteur, et un flux d'air froid qui circule à l'extérieur du turboréacteur à travers un canal annulaire que l'on appelle veine.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur.

La structure d'un inverseur comprend un capot d'inverseur déplaçable entre, d'une part, une position déployée dans laquelle il ouvre dans la nacelle un passage destiné au flux d'air dévié, et d'autre part, une position d'escamotage dans laquelle il ferme ce passage.

On connaît de l'art antérieur au moins deux types de capot d'inverseur.

On connaît le capot monobloc, de forme quasi-annulaire, s'étendant d'un côté à l'autre du pylône sans interruption, et souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Dans un cas comme dans l'autre, c'est le recul du capot par coulissement le long des rails solidaires du pylône qui permet de dégager les grilles d'inversion de poussée, et ainsi de mettre en oeuvre la fonction d'inversion de poussée.

Il est bien entendu crucial qu'un tel mouvement de coulissement ne puisse pas se produire de manière inopinée : une telle ouverture serait en effet fatale en phase de vol.

Pour ces raisons, des verrous de sécurité sont prévus à différents endroits de l'inverseur de poussée pour bloquer l'ouverture non souhaitée du capot.

Dans un inverseur à « D-duct », on prévoit classiquement trois verrous de sécurité pour chaque demi-capot : deux verrous dits primaires agissant directement sur deux vérins d'actionnement de chaque demi-capot, et un troisième verrou dit tertiaire interposé entre la poutre dite « 6 heures » (c'est-à-dire disposée dans la partie inférieure de la nacelle et sur laquelle les deux demi-capots sont montés coulissants) et le demi-capot concerné.

Des sources de puissance indépendantes sont prévues pour ces verrous, de manière à accroître la fiabilité du dispositif de sécurité.

La localisation éloignée du troisième verrou par rapport aux deux autres offre de plus un gain de sécurité vis-à-vis d'un « duct burst » (explosion d'une conduite) ou d'une perte d'aube : dans un tel cas, seuls un ou deux verrous pourrait éventuellement être détruits, mais pas tous.

Dans un inverseur à « O-duct », il n'y a par définition pas de poutre 6 heures : donc l'implantation d'un troisième verrou comme dans un inverseur à « D-duct » n'est pas possible.

On connaît de l'art antérieur le brevet français délivré et publié sous le numéro FR 2 952 908, appartenant au demandeur, dans lequel l'invention protégée concerne des moyens de verrouillage du coulissement du capot « O-duct » d'inverseur interposés entre le pylône et ledit capot.

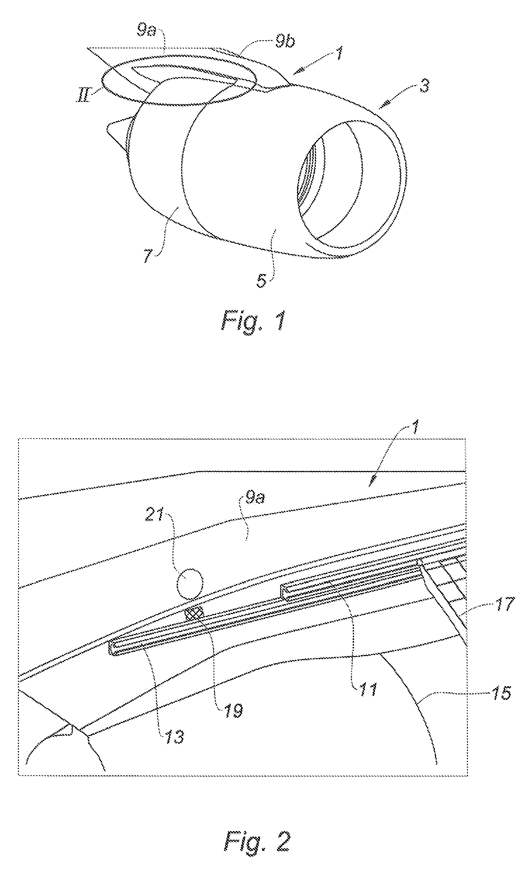

Les figures 1 et 2 illustrent de tels moyens de verrouillage selon l'art antérieur.

Un ensemble pour turboréacteur d'aéronef comprend un pylône 1 auquel est suspendue une nacelle 3 comprenant typiquement un capot amont fixe 5 et un capot aval mobile 7, l'amont et l'aval s'entendant par rapport au flux d'air traversant la nacelle.

En position de fonctionnement de la nacelle, c'est-à-dire hors des opérations de maintenance sur le turboréacteur, le capot aval 7 est monté coulissant entre la position représentée à la figure 1, dite position de «jet direct», et une position (non représentée) coulissée vers l'aval de la nacelle, permettant de réaliser une fonction d'inversion de poussée par rejet d'une partie de l'air traversant la nacelle en amont de celle-ci.

L'inverseur de poussée représenté à la figure 1 est du type à « O-duct », c'est-à-dire que le capot coulissant 7 forme une pièce monobloc sensiblement annulaire s'étendant sans discontinuité d'un côté 9a du pylône 1 au côté opposé 9b de ce pylône.

La figure 2 se rapporte à la zone Il de la figure 1, le capot coulissant 7 ayant été ôté pour une meilleure visibilité.

On peut voir le pylône 1 et, sur le côté 9a de ce pylône, un rail court 11 et un rail long 13.

On peut également voir la structure interne 15 entourant le turboréacteur, définissant la veine d'air froid.

Le rail court 11 permet le coulissement de grilles de déviation 17 du flux d'air entre une position de service représenté à la figure 2, et une position de maintenance dans laquelle ces grilles sont coulissées à l'extrémité arrière du rail court 11, de manière à permettre l'accès au turboréacteur.

Le rail long 13 et son homologue disposé de l'autre côté du pylône 1 permettent le coulissement du capot 7 entre une position de fonctionnement, comprenant une position de jet direct et une position d'inversion de poussée dans laquelle il dégage les grilles de déviation 17, permettant l'orientation d'une partie du flux d'air circulant dans la veine vers l'avant de la nacelle, et une position de maintenance (non représentée).

Un dispositif de verrouillage 19 est monté à l'intérieur du pylône 1. Ce dispositif permet d'assurer le maintien du capot dans une position fermée, c'est-à-dire correspondant à un fonctionnement de la nacelle en jet direct. Une trappe 21 formée sur le côté 9a du pylône 1 permet d'accéder au dispositif de verrouillage.

Le dispositif de verrouillage est, selon l'état de la technique, et comme l'illustrent les figures 1 et 2, renfermé à l'intérieur d'une trappe réalisée dans la paroi du pylône auquel sont rattachés la nacelle et le turboréacteur.

Un tel agencement présente plusieurs inconvénients.

Tout d'abord, la réalisation d'une trappe dans le pylône nécessite de découper localement une partie du flanc du pylône, ce qui affecte la tenue structurale dudit pylône.

Ensuite, lors d'opérations de maintenance sur le turboréacteur, le dispositif de verrouillage doit être inhibé afin de pouvoir accéder au turboréacteur. Il est donc obligatoire de démonter cette trappe pour chaque opération de maintenance, ce qui augmente grandement le temps d'accès au moteur.

Ainsi, il existe un besoin de disposer d'un verrou tertiaire pour capot monobloc d'inverseur, dont l'inhibition peut être accomplie manuellement par un opérateur depuis l'extérieur du capot, d'une part sans avoir à démonter de trappe, et d'autre part sans affecter la tenue structurale du pylône.

A cet effet, la présente invention se rapporte à un ensemble pour turboréacteur, comprenant un pylône et une nacelle supportée par ledit pylône et entourant le turboréacteur de façon à définir une veine de circulation d'un flux d'air secondaire, ladite nacelle comprenant au moins un dispositif d'inversion de poussée comprenant un capot monobloc monté coulissant alternativement entre une position de fonctionnement et une position de maintenance de la nacelle, ledit ensemble comprenant au moins un dispositif de verrouillage/ déverrouillage du coulissement dudit capot, interposé entre ledit pylône et ledit capot, ledit dispositif comprenant des moyens de rétention dudit capot, ledit dispositif étant mobile alternativement entre une position active autorisant un mode de fonctionnement de la nacelle et une position inhibée autorisant un mode de maintenance de ladite nacelle, ledit ensemble étant remarquable en ce que le dispositif de verrouillage/ déverrouillage comprend un balancier de commutation des moyens de rétention, ledit balancier comprenant au moins un levier d'inhibition des moyens de rétention et au moins un levier d'activation desdits moyens de rétention, lesdits leviers étant montés sur un arbre de commutation dudit dispositif, ledit levier d'inhibition étant apte à être mis en rotation par l'intermédiaire de moyens d'actionnement directement accessibles depuis la veine de circulation du flux d'air secondaire lorsque le dispositif de verrouillage/ déverrouillage est en position active, et ledit levier d'activation étant apte à être mis en rotation depuis ladite veine lorsque ledit dispositif est en position inhibée.

Ainsi, la présence d'un balancier de commutation à au moins deux leviers, dont l'activation de l'un ou l'autre des leviers est réalisée directement depuis la veine de circulation du flux d'air secondaire, permet un passage rapide de l'un à l'autre des modes de fonctionnement du dispositif de verrouillage/déverrouillage sans avoir à démonter de trappe, ce qui permet de réduire le temps d'accès au moteur de l'aéronef et d'améliorer la tenue structurale du pylône.

Selon une caractéristique de l'invention, les moyens d'actionnement comprennent au moins un ensemble bouton poussoir/ poussoir comprenant au moins un bouton poussoir apte à être actionné directement depuis la veine de circulation du flux d'air secondaire lorsque le dispositif de verrouillage/déverrouillage est en position active de façon à interagir avec au moins un poussoir solidaire du levier d'inhibition.

L'activation de l'ensemble bouton poussoir/poussoir constitue un moyen permettant de réaliser simplement le passage de la position active vers la position inhibée du dispositif de verrouillage/déverrouillage. L'opérateur exerce manuellement une pression sur le bouton poussoir accessible depuis la veine de circulation du flux d'air froid.

Selon une autre caractéristique de l'invention, l'ensemble bouton poussoir/ poussoir est renfermé au moins partiellement dans un corps de guidage, et en ce que ledit ensemble est mobile en translation le long d'un axe sensiblement longitudinal dudit corps.

Avantageusement, l'ensemble bouton poussoir/poussoir comprend des moyens de maintien en position comprenant au moins une bille à ressort alternativement logée dans une gorge de rétention dudit corps de guidage pour une position active du dispositif de verrouillage/déverrouillage, et dans une gorge d'inhibition dudit corps de guidage pour une position inhibée dudit dispositif.

Les billes à ressort permettent d'assurer le maintien en position de l'ensemble bouton poussoir/poussoir, en position active et en position inhibée du dispositif de verrouillage/déverrouillage.

Optionnellement, les moyens de maintien en position peuvent comprennent au moins une bille de sûreté logée dans une gorge de sûreté dudit corps de guidage pour une position active du dispositif de verrouillage/ déverrouillage.

Les billes de sûreté, installées de préférence dans le bouton poussoir, permettent d'assurer que l'ensemble bouton poussoir/poussoir ne soit pas déplacé inopinément en phase de vol de l'aéronef.

Encore optionnellement, les moyens de maintien en position comprennent également des moyens élastiques positionnés entre le bouton poussoir et le poussoir.

Les moyens de rétention comprennent au moins une gâche mobile apte à coopérer avec au moins un pêne solidaire du capot monobloc pour une position active dudit dispositif, et à libérer ledit pêne pour une position d'inhibition dudit dispositif.

Selon une caractéristique avantageuse de l'invention, le balancier de commutation comprend des moyens de contrôle visuel représentatifs des positions inhibée et active dudit dispositif, lesdits moyens de contrôle visuels étant renfermés à l'intérieur du pylône pour une position active du dispositif de verrouillage/ déverrouillage, et découverts au moins partiellement et accessibles depuis la veine de circulation du flux d'air secondaire pour une position inhibée dudit dispositif.

Ainsi, en équipant le dispositif de verrouillage/déverrouillage de tels moyens de contrôle visuel, conformés pour être découverts partiellement uniquement après activation manuelle des moyens d'actionnement, l'opérateur est assuré que le capot d'inverseur est désolidarisé du pylône tant que les moyens de contrôle visuel sont dans une position découverte.

Les moyens de contrôle visuel comprennent une extrémité témoin solidaire du levier d'activation.

Les moyens d'actionnement sont solidaires d'une platine support solidaire du pylône et présentant au moins une surface aérodynamique.

La platine support comprend au moins une fente conformée pour être traversée au moins partiellement par le levier d'activation pour une position inhibée du dispositif de verrouillage/déverrouillage.

D'autres caractéristiques et avantages de la présente invention apparaîtront à la lecture de la description qui va suivre et à l'examen des figures ci-annexées, dans lesquelles :
- les figures 1 et 2 illustrent un ensemble pour turboréacteur selon l'art antérieur ;
- la figure 3 représente schématiquement le dispositif de verrouillage/déverrouillage selon l'invention dans une position active, observé depuis la veine de flux d'air froid ;
- la figure 4 représente le dispositif de verrouillage/ déverrouillage observé depuis l'intérieur du pylône ;
- les figures 5a à 5c illustrent le dispositif de verrouillage/ déverrouillage vu en coupe selon l'axe longitudinal de l'ensemble bouton poussoir/poussoir ;
- la figure 6 est une vue similaire à celle de la figure 3, le dispositif de verrouillage/déverrouillage étant dans une position inhibée.

Sur l'ensemble des figures, des références identiques ou analogues désignent des organes ou ensembles d'organes identiques ou analogues.

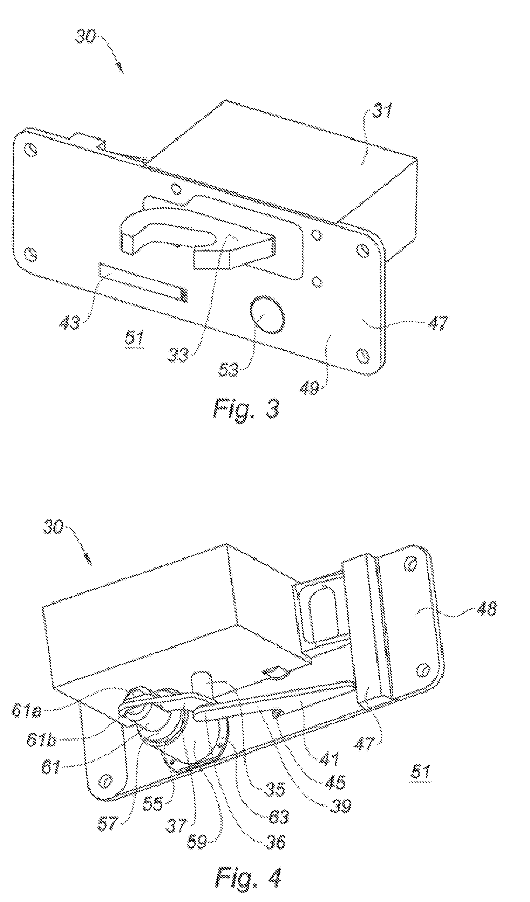

On se réfère à la figure 3 illustrant le dispositif de verrouillage/ déverrouillage 30 selon l'invention, représenté ici en position dite active, correspondant à un mode selon lequel la nacelle est en fonctionnement, soit en jet direct, soit en jet inverse.

En fonctionnement jet direct, le dispositif de verrouillage/ déverrouillage est engagé, c'est-à-dire que le capot aval est immobile par rapport au capot amont fixe.

En fonctionnement jet inverse, le dispositif de verrouillage/ déverrouillage est rétracté, c'est-à-dire que le capot aval est mobile en translation, autorisant alors le déploiement de l'inverseur de poussée. Le capot aval est ensuite apte à être immobilisé par passage dudit dispositif vers sa position d'engagement lorsque la phase fonctionnement en jet inverse est terminée.

Aussi, le dispositif de verrouillage/déverrouillage est apte à être commuté entre la position active et une position inhibée autorisant un mode de maintenance de la nacelle, afin de permettre à un opérateur de réaliser des travaux de maintenance au sol. La position inhibée du dispositif de verrouillage/ déverrouillage permet l'ouverture complète du capot aval, facilitant l'accès au turboréacteur.

Le dispositif de verrouillage/déverrouillage 30 est installé dans le pylône (non représenté) auquel sont suspendus le turboréacteur et la nacelle.

Le dispositif 30 comprend des moyens de rétention permettant au capot aval d'être maintenu au pylône afin que le capot aval ne s'ouvre en phase de vol.

Les moyens de rétention comprennent un verrou comprenant un corps 31 à l'intérieur duquel est montée une gâche 33 apte à coopérer avec un pêne (non représenté) supporté par le capot aval. La gâche est mobile en rotation autour d'un arbre de commutation 35 (visible en figure 4) du dispositif de verrouillage/ déverrouillage.

Plus précisément, la gâche 33 est solidaire d'un axe (non représenté) entraîné en rotation par l'intermédiaire de l'arbre de commutation 35 du dispositif de verrouillage/déverrouillage. Un dispositif d'inversion du sens de rotation connu de l'homme du métier peut être prévu entre l'arbre de commutation 35 et l'axe auquel est reliée la gâche.

En se référant à la figure 4, sur l'arbre de commutation 35 est monté un balancier de commutation 36 du dispositif de verrouillage/ déverrouillage permettant alternativement un passage dudit dispositif entre une position active et une position inhibée.

Le balancier de commutation comprend un levier d'inhibition 37 et un levier d'activation 39 chacun solidaire de l'arbre de commutation 35.

Le levier d'activation comprend un corps 41 et une extrémité de manipulation 43 (visible en figure 3) du levier d'activation 39, et apte à traverser momentanément une fente 45 réalisée sur une platine support 47.

La platine support présente une paroi interne 48 sensiblement plane, et adopte une forme de préférence rectangulaire. Cette forme peut être amenée à être modifiée à volonté.

La platine support 47 est destinée à être fixée au pylône, la paroi interne 48 étant positionnée à l'intérieur du pylône. Le maintien de la platine 47 au pylône s'effectue par exemple par vissage.

En se référant brièvement à la figure 3, la platine 47 présente encore une paroi externe 49 destinée à être au contact d'une veine 51 de circulation du flux d'air secondaire. Ainsi, la paroi externe 49 présente une surface aérodynamique.

On se réfère à la figure 4. Lorsque le dispositif de verrouillage/ déverrouillage est en position active, le corps 41 du levier d'activation 39 est intégralement renfermé à l'intérieur du pylône, et l'extrémité de manipulation dudit levier se trouve dans l'alignement de la surface aérodynamique réalisée par la platine support 47. Dans une telle position, le corps 41 est caché par la platine support 47, et ainsi non visible par l'opérateur depuis la veine de circulation du flux d'air secondaire.

L'arbre de commutation 35 reçoit un ressort de torsion (non représenté) afin de maintenir le levier d'activation 39 par défaut dans une position représentative de la position active du dispositif de verrouillage/ déverrouillage, et ainsi de maintenir l'extrémité de manipulation du levier d'activation 39 dans l'alignement de la platine support 47.

En outre, le levier d'activation 39 est avantageusement réalisé en aluminum afin de minimiser la masse du dispositif de verrouillage/ déverrouillage. Bien sûr, l'emploi de tout autre matériau de nature à minimiser la masse du dispositif peut être envisagé.

Le dispositif de verrouillage/déverrouillage comprend également des moyens d'actionnement, dont leur activation permet une désolidarisation de la gâche 33 et du pêne.

Les moyens d'actionnement comprennent un ensemble composé d'un bouton poussoir 53 (visible en figure 3) accessible pour un opérateur depuis la veine de circulation du flux d'air secondaire, et d'un poussoir 55.

Le poussoir 55 présente un premier corps 57 de forme sensiblement cylindrique renfermé, au moins partiellement lorsque le dispositif 30 est dans une position active, dans un corps de guidage 59 de forme sensiblement cylindrique et sensiblement concentrique au premier corps 57 du poussoir 55.

Le poussoir 55 présente par ailleurs un deuxième corps 61 cylindrique, également sensiblement concentrique audit premier corps et positionné dans son prolongement. Le deuxième corps 61 présente deux hémisphères 61 a et 61 b permettant le passage du levier d'inhibition 37.

Le corps de guidage 59 est rapporté sur la platine support 47 grâce à une collerette 63 réalisée au niveau de la base du corps de guidage.

La collerette 63 est par exemple vissée à la platine support 47. Le fait que le corps de guidage soit rapporté à la platine facilite la fabrication de ladite platine et dudit corps de guidage. Cependant, il est bien sûr possible de réaliser l'ensemble comprenant la platine support et le corps de guidage en une seule pièce si l'homme du métier y trouve un intérêt particulier.

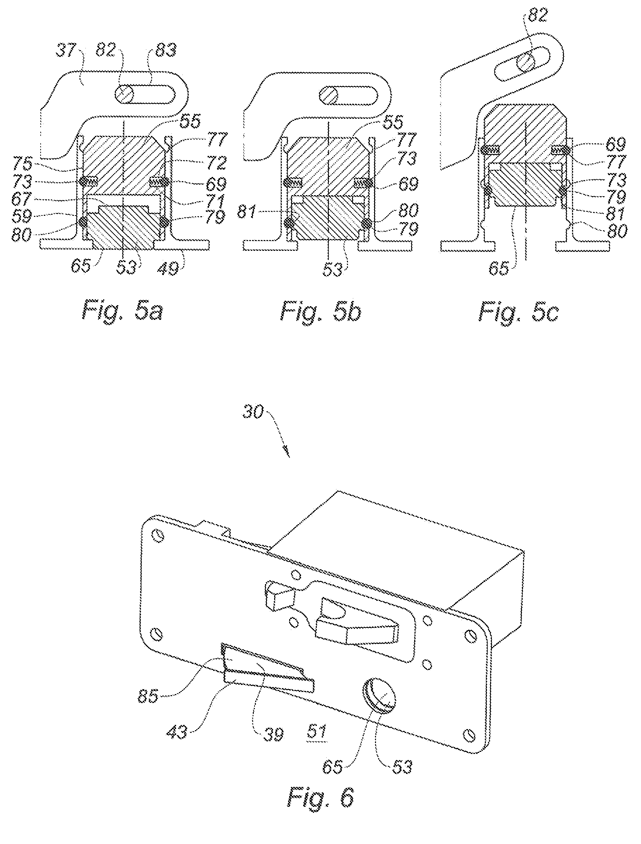

En outre, le corps de guidage 59 comprend également des gorges destinées à recevoir des rangées de billes, comme décrit plus en détails dans la suite de la description, en référence aux figures 5a à 5c.

L'ensemble bouton poussoir 53/poussoir 55, le corps de guidage 59 et le levier d'inhibition 37 sont avantageusement réalisés en titane, afin d'obtenir de bons contacts entre les pièces. Bien sûr, il est possible de réaliser ces pièces en tout autre matériau si nécessaire.

On se réfère à présent aux figures 5a à 5c, illustrant le dispositif de verrouillage/déverrouillage vu en coupe selon l'axe longitudinal de l'ensemble bouton poussoir/ poussoir.

Le bouton poussoir 53 comprend une paroi de manipulation 65 s'inscrivant dans l'alignement de la surface aérodynamique de la paroi externe 49 de la platine support lorsque le dispositif de verrouillage est en position active.

Le bouton poussoir 53 comprend une paroi d'appui 67 destinée à venir au contact du poussoir 55 lorsqu'un opérateur exerce une pression sur la paroi de manipulation 65 afin de réaliser l'opération de commutation du dispositif de verrouillage/déverrouillage depuis une position active vers une position inhibée, comme expliqué plus en détails ci-après.

Afin de stabiliser l'ensemble bouton poussoir 53/poussoir 55 dans l'une des deux positions extrêmes du dispositif de verrouillage/ déverrouillage, ce dernier comprend des moyens de maintien en position.

Lesdits moyens de maintien en position comprennent une pluralité de billes 69 dites « à ressort » montées dans un logement 71 s'inscrivant au niveau de la paroi latérale du poussoir 55.

Ces billes sont maintenues en partie à l'extérieur de leur logement 71 grâce à des moyens élastiques réalisés par exemple par des ressorts de compression 72 prenant appui sur le fond dudit logement.

Afin de permettre la stabilisation du poussoir 55 dans une position correspondant à la position active du dispositif de verrouillage/déverrouillage, position représentée à la figure 5a, les billes 69 sont contenues dans une gorge de rétention 73 réalisée au niveau de la paroi interne 75 du corps de guidage 59.

Le corps de guidage comprend également une gorge d'inhibition 77 qui permet le blocage de l'ensemble bouton poussoir/poussoir lors de son déplacement en translation.

Lorsque le dispositif est dans une position inhibée, position représentée à la figure 5c, les billes 69 sont contenues dans la gorge d'inhibition 77, ce qui permet la stabilisation du poussoir 55 dans cette position d'inhibition.

Les moyens de maintien en position assurent la stabilité du bouton poussoir dans les deux positions extrêmes précitées.

Afin d'augmenter la sécurité et d'empêcher un déplacement intempestif du bouton poussoir, les moyens de maintien comprennent avantageusement des billes de sûreté 79 positionnées, en position active du dispositif de verrouillage/déverrouillage, dans une gorge de sûreté 80 du corps de guidage 59.

A cet effet, le bouton poussoir 53 comprend une gorge de sûreté 81 conformée pour recevoir lesdites billes de sûreté pour tout déplacement du bouton poussoir 53 à l'intérieur du corps de guidage 59, alternativement entre un position active et une position inhibée.

En outre, des moyens élastiques, par exemple constitués par un ressort de compression (non représenté), peuvent également être positionnés entre la paroi d'appui 67 du bouton poussoir 53 et le poussoir 55 afin d'éviter un déplacement non souhaité du bouton poussoir dû aux vibrations subies par la nacelle. Ces moyens élastiques constituent également un moyen de sécurité empêchant tout déplacement non souhaité du bouton poussoir 53. Un tel ressort de compression peut être employé seul ou conjointement avec les billes de sûreté.

De plus, tout autre moyen permettant d'éviter un contact inopiné entre le bouton poussoir et le poussoir peut être envisagé. En outre, l'ensemble bouton poussoir/ poussoir peut également être réalisé en une seule pièce si nécessaire.

Alternativement, les moyens de maintien en position peuvent comprendre uniquement les billes à ressort 69. Le maintien en position de l'ensemble est alors assuré uniquement par lesdites billes 69 et par ledit ressort de compression.

Comme représenté aux figures 5a à 5c, le poussoir 55 comprend également une tige 82 de forme sensiblement cylindrique, destinée à pénétrer dans une ouverture 83 du levier d'inhibition 37.

L'axe longitudinal de la tige 82 est sensiblement parallèle à l'arbre de commutation du dispositif de verrouillage/déverrouillage.

L'ouverture 83 adopte la forme d'un trou oblong afin de permettre une mise en rotation du levier d'inhibition 37 lors du déplacement en translation de la tige 82.

La tige 82 se translate soit consécutivement à l'activation des moyens d'actionnement par l'opérateur, c'est-à-dire par exercice d'une pression sur la paroi de manipulation 65 du bouton poussoir 53, soit suite à l'exercice d'une pression sur le levier d'activation 39 afin de commuter le dispositif de verrouillage/ déverrouillage depuis une position inhibée vers une position active.

Le fonctionnement du dispositif de verrouillage/déverrouillage selon l'invention est décrit en se référant à l'ensemble des figures 3 à 6.

Lorsque le dispositif de verrouillage/déverrouillage est en position active, l'ensemble bouton poussoir/poussoir se trouve dans la position représentée en figure 5a.

Dans cette position, le bouton poussoir 53 et l'extrémité de manipulation 43 du levier d'activation 39 sont dans l'alignement de la paroi externe 49 de la platine support 47. Le levier d'inhibition 37 et le corps 41 du levier d'activation 39 sont quant à eux renfermés intégralement à l'intérieur du pylône.

Lorsqu'un opérateur souhaite commuter le dispositif de verrouillage/ déverrouillage entre la position active et la position inhibée, il exerce manuellement une pression sur la paroi de manipulation 65 du bouton poussoir 53, accessible directement depuis la veine 51 de circulation du flux d'air secondaire.

L'activation du bouton poussoir 53 entraîne un déplacement axial de ce dernier jusqu'à entrer en contact avec le poussoir 55, comme représenté à la figure 5b.

Les billes de sûreté 79 sont alors libérées de leur gorge de sûreté 80 et sont engagées dans la gorge de sûreté 81 du bouton poussoir 37.

Les billes à ressort 69 sortent alors de leur gorge de rétention 73 et la translation de l'ensemble bouton poussoir 53/poussoir 55 peut se poursuivre jusqu'à ce que les billes à ressort 69 pénètrent dans la gorge d'inhibition 77, comme représenté à la figure 5c.

L'ensemble ne peut continuer à translater en raison de butées installées directement sur l'arbre de commutation du dispositif de verrouillage/ déverrouillage.

L'action exercée par le bouton poussoir 53 sur le poussoir 55, dont la tige 82 est en contact avec l'ouverture 83 réalisée dans le levier d'inhibition 37, entraîne alors en rotation ledit levier.

Le levier d'inhibition 37, solidaire de l'arbre de commutation 35 du dispositif de verrouillage/déverrouillage, entraîne en rotation ledit arbre, permettant ainsi la libération de la gâche 33 du pêne du capot.

De concert, le levier d'activation 39, lui-même également solidaire de l'arbre de commutation 35, pivote à son tour, entraînant le passage d'une partie du corps 41 dudit levier à travers la fente 45, et la découverte d'une extrémité témoin 85 du levier d'activation, comme illustré à la figure 6, représentant le dispositif de verrouillage/déverrouillage en position inhibée.

L'extrémité témoin 85 du levier d'activation 39 constitue des moyens de contrôle visuel représentatifs de la position inhibée du dispositif de verrouillage/ déverrouillage.

A cet effet, l'extrémité témoin 85 et l'extrémité de manipulation 43 du levier d'activation 39 présentent avantageusement une couleur vive, par exemple rouge, de façon à informer visuellement et rapidement l'opérateur de la position inhibée du dispositif de verrouillage/déverrouillage lorsque l'extrémité témoin 85 est visible depuis la veine 51.

Dans une telle position, la paroi de manipulation 65 du bouton poussoir 53 se trouve enfoncée dans le corps de guidage 59 en raison des moyens de maintien en position.

Le capot aval peut ainsi être manipulé, après la seule activation manuelle depuis la veine du bouton poussoir.

Lorsque l'opérateur souhaite passer de la position inhibée vers une position active, il réalise l'opération inverse consistant à exercer une pression sur l'extrémité de manipulation 43 du levier d'activation 39, ce qui entraîne le pivotement du balancier de commutation 36, et par conséquent la mise en rotation de l'arbre de commutation 35, et ainsi le déplacement en translation de la tige 82 du poussoir 55, entraînant alors le déplacement en translation de l'ensemble poussoir 55/ bouton poussoir 53, jusqu'à ce que les billes à ressort 69 pénètrent dans la gorge de rétention 73 du corps de guidage 59, que les billes de sûreté 79 pénètrent dans la gorge de sûreté 80 dudit corps de guidage, et que la paroi de manipulation 65 se retrouve dans l'alignement avec la paroi externe 49 de la platine support 47. Simultanément, la gâche 33 devient solidaire du pêne du capot d'inverseur, assurant alors le maintien dudit capot au pylône, et l'extrémité témoin 85 est renfermée à l'intérieur du pylône.

Grâce à la présente invention, on parvient à libérer facilement le capot d'inverseur afin de réaliser des opérations de maintenance. En effet, le seul exercice d'une pression sur le bouton poussoir accessible directement depuis la veine de circulation du flux d'air secondaire permet instantanément de commuter le dispositif de verrouillage/déverrouillage du capot d'inverseur entre une position active et une position inhibée.

Réciproquement, on commute le dispositif de verrouillage entre la position inhibée et la position active grâce au seul exercice d'une pression sur un levier d'activation lui aussi directement accessible depuis la veine de circulation du flux d'air secondaire.

Ainsi, un tel dispositif améliore très sensiblement ceux connus de l'art antérieur en ce qu'il n'est plus nécessaire d'ouvrir une trappe réalisée dans le pylône. Le temps d'accès au moteur se trouve alors considérablement réduit et la tenue structurale du pylône est améliorée.

Par ailleurs, grâce aux moyens de contrôle visuel, on s'assure que le dispositif de verrouillage/ déverrouillage assure bien la position active et que par conséquent le capot d'inverseur ne risque pas de s'ouvrir en vol.

Enfin, comme il va de soi, l'invention ne se limite pas aux seules formes de réalisation de ce dispositif de verrouillage/déverrouillage, décrites ci-dessus à titre d'exemples, mais elle embrasse au contraire toutes les variantes.

## Revendications

1. Ensemble pour turboréacteur, comprenant un pylône et une nacelle supportée par ledit pylône et entourant le turboréacteur de façon à définir une veine de circulation (51) d'un flux d'air secondaire, ladite nacelle comprenant au moins un dispositif d'inversion de poussée comprenant un capot monobloc monté coulissant alternativement entre une position de fonctionnement et une position de maintenance de la nacelle, ledit ensemble comprenant au moins un dispositif de verrouillage/déverrouillage (30) du coulissement dudit capot, interposé entre ledit pylône et ledit capot, ledit dispositif comprenant des moyens de rétention dudit capot, ledit dispositif étant mobile alternativement entre une position active autorisant un mode de fonctionnement de la nacelle et une position inhibée autorisant un mode de maintenance de ladite nacelle, ledit ensemble étant **caractérisé en ce que** le dispositif de verrouillage/déverrouillage comprend un balancier de commutation (36) des moyens de rétention, ledit balancier comprenant au moins un levier d'inhibition (37) des moyens de rétention et au moins un levier d'activation (39) desdits moyens de rétention, lesdits leviers étant montés sur un arbre de commutation (35) dudit dispositif, ledit levier d'inhibition (37) étant apte à être mis en rotation par l'intermédiaire de moyens d'actionnement directement accessibles depuis la veine de circulation (51) du flux d'air secondaire lorsque le dispositif de verrouillage/déverrouillage (30) est en position active, et ledit levier d'activation (39) étant apte à être mis en rotation depuis ladite veine lorsque ledit dispositif est en position inhibée.

2. Ensemble selon la revendication 1, **caractérisé en ce que** les moyens d'actionnement comprennent au moins un ensemble bouton poussoir/ poussoir comprenant au moins un bouton poussoir (53) apte à être actionné directement depuis la veine de circulation (51) du flux d'air secondaire lorsque le dispositif de verrouillage/ déverrouillage est en position active de façon à interagir avec au moins un poussoir (55) solidaire du levier d'inhibition (37).

3. Ensemble selon la revendication 2, **caractérisé en ce que** l'ensemble bouton poussoir/poussoir est renfermé au moins partiellement dans un corps de guidage (59), et **en ce que** ledit ensemble est mobile en translation le long d'un axe sensiblement longitudinal dudit corps.

4. Ensemble selon la revendication 3, **caractérisé en ce que** l'ensemble bouton poussoir/poussoir comprend des moyens de maintien en position comprenant au moins une bille à ressort (69) alternativement logée dans une gorge de rétention (73) dudit corps de guidage (59) pour une position active du dispositif de verrouillage/déverrouillage (30), et dans une gorge d'inhibition (77) dudit corps de guidage (59) pour une position inhibée dudit dispositif.

5. Ensemble selon la revendication 4, **caractérisé en ce que** les moyens de maintien en position comprennent au moins une bille de sûreté (79) logée dans une gorge de sûreté (80) dudit corps de guidage (59) pour une position active du dispositif de verrouillage/déverrouillage.

6. Ensemble selon l'une quelconque des revendications 4 ou 5, **caractérisé en ce que** les moyens de maintien en position comprennent des moyens élastiques positionnés entre le bouton poussoir (53) et le poussoir (55).

7. Ensemble selon l'une quelconque des revendications 1 à 6, **caractérisé en ce que** les moyens de rétention comprennent au moins une gâche (33) mobile apte à coopérer avec au moins un pêne solidaire du capot monobloc pour une position active dudit dispositif, et à libérer ledit pêne pour une position d'inhibition dudit dispositif.

8. Ensemble selon l'une quelconque des revendications 1 à 7, **caractérisé en ce que** le balancier de commutation (36) comprend des moyens de contrôle visuel représentatifs des positions inhibée et active dudit dispositif, lesdits moyens de contrôle visuels étant renfermés à l'intérieur du pylône pour une position active du dispositif de verrouillage/déverrouillage (30), et découverts au moins partiellement et accessibles depuis la veine de circulation (51) du flux d'air secondaire pour une position inhibée dudit dispositif.

9. Ensemble selon la revendication 8, **caractérisé en ce que** les moyens de contrôle visuel comprennent une extrémité témoin (85) solidaire du levier d'activation (39).

10. Ensemble selon l'une quelconque des revendications 1 à 9, **caractérisé en ce que** les moyens de rétention et les moyens d'actionnement sont solidaires d'une platine support (47) solidaire du pylône et présentant au moins une surface aérodynamique (49).

11. Ensemble selon la revendication 10, **caractérisé en ce que** la platine support (47) comprend au moins une fente (45) conformée pour être traversée au moins partiellement par le levier d'activation (39) pour une position inhibée du dispositif de verrouillage/déverrouillage.

## Patentansprüche

1. Baugruppe für Turbodüsentriebwerk, einen Trägermast und eine Gondel umfassend, die vom besagten Trägermast getragen wird, und das Turbodüsentriebwerk umgibt, um einen Zirkulationskanal (51) einer Sekundärluftströmung zu definieren, wobei die besagte Gondel zumindest eine Schubumkehrvorrichtung umfasst, die eine einteilige Abdeckung umfasst, die alternativ zwischen einer Betriebsposition und einer Wartungsposition der Gondel gleitend montiert ist, wobei die besagte Baugruppe zumindest eine Verriegelungs-/ Entriegelungsvorrichtung (30) für die Gleitbewegung der besagten Abdeckung umfasst, die zwischen dem besagten Trägermast und der besagten Abdeckung angeordnet ist, wobei die besagte Vorrichtung Mittel zum Zurückhalten der besagten Abdeckung umfasst, und die besagte Vorrichtung alternativ zwischen einer aktiven Position zur Freigabe eines Betriebsmodus der Gondel und einer unterdrückten Position zur Freigabe eines Wartungsmodus der besagten Gondel bewegt werden kann, wobei die besagte Baugruppe **dadurch gekennzeichnet ist, dass** die Verriegelungs-/ Entriegelungsvorrichtung eine Schaltschwinge (36) für die Rückhaltemittel umfasst, wobei die besagte Schwinge zumindest einen Unterdrückungshebel (37) für die Rückhaltemittel, und zumindest einen Aktivierungshebel (39) für die besagten Rückhaltemittel umfasst, wobei die besagten Hebel auf einer Schaltwelle (35) der besagten Vorrichtung montiert sind, und der besagte Unterdrückungshebel (37) in der Lage ist, über Betätigungsmittel in Drehung versetzt zu werden, die direkt vom Zirkulationskanal (51) der Sekundärluftströmung aus zugänglich sind, wenn sich die Verriegelungs-/ Entriegelungsvorrichtung (30) in der aktiven Position befindet, und der besagte Aktivierungshebel (39) in der Lage ist, vom besagten Kanal aus in Drehung versetzt zu werden, wenn sich die besagte Vorrichtung in der unterdrückten Position befindet.

2. Baugruppe nach Anspruch 1, **dadurch gekennzeichnet, dass** die Betätigungsmittel zumindest eine Druckknopf/Stößel-Einheit mit zumindest einem Druckknopf (53) umfassen, der in der Lage ist, direkt vom Zirkulationskanal (51) der Sekundärluftströmung aus betätigt zu werden, wenn sich die Verriegelungs-/ Entriegelungsvorrichtung in der aktiven Position befindet, um mit zumindest einem Stößel (55) zusammenzuwirken, der fest mit dem Unterdrückungshebel (37) verbunden ist.

3. Baugruppe nach Anspruch 2, **dadurch gekennzeichnet, dass** die Druckknopf/Stößel-Einheit zumindest teilweise in ein Führungsgehäuse (59) eingeschlossen ist, und dadurch, dass die besagte Baugruppe in Vorschubrichtung entlang einer Achse bewegt werden kann, die in etwa in Längsrichtung des besagten Gehäuses verläuft.

4. Baugruppe nach Anspruch 3, **dadurch gekennzeichnet, dass** die Druckknopf/Stößel-Einheit Mittel zur Positionshaltung umfasst, die zumindest eine Federkugel (69) umfassen, die alternativ in einer Rückhaltenut (73) des besagten Führungsgehäuses (59) für eine aktive Position der Verriegelungs-/ Entriegelungsvorrichtung (30), und in einer Unterdrückungsnut (77) des besagten Führungsgehäuses (59) für eine unterdrückte Position der besagten Vorrichtung einrastet.

5. Baugruppe nach Anspruch 4, **dadurch gekennzeichnet, dass** die Mittel zur Positionshaltung zumindest eine Sicherheitskugel (79) umfassen, die für eine aktive Position der Verriegelungs-/ Entriegelungsvorrichtung in einer Sicherheitsnut (80) des besagten Führungsgehäuses (59) einrastet.

6. Baugruppe nach irgendeinem der Ansprüche 4 oder 5, **dadurch gekennzeichnet, dass** die Mittel zur Positionshaltung elastische Mittel umfassen, die zwischen dem Druckknopf (53) und dem Stößel (55) positioniert sind.

7. Baugruppe nach irgendeinem der Ansprüche 1 bis 6, **dadurch gekennzeichnet, dass** die Rückhaltemittel zumindest einen mobilen Schließhaken (33) umfassen, der in der Lage ist, für eine aktive Position der besagten Vorrichtung mit zumindest einem Riegel zusammenzuwirken, der fest mit der einteiligen Abdeckung verbunden ist, und den besagten Riegel für eine Unterdrückungsposition der besagten Vorrichtung freizugeben.

8. Baugruppe nach irgendeinem der Ansprüche 1 bis 7, **dadurch gekennzeichnet, dass** die Schaltschwinge (36) Mittel zur Sichtprüfung umfasst, die repräsentativ für die unterdrückte und die aktive Position der besagten Vorrichtung sind, wobei die besagten Mittel zur Sichtprüfung für eine aktive Position der Verriegelungs-/ Entriegelungsvorrichtung (30) im Inneren des Trägermasten eingeschlossen sind, und für eine unterdrückte Position der besagten Vorrichtung zumindest teilweise freigelegt und vom Zirkulationskanal (51) aus zugänglich sind.

9. Baugruppe nach Anspruch 8, **dadurch gekennzeichnet, dass** die Mittel zur Sichtprüfung ein Kontrollende (85) umfassen, das fest mit dem Aktivierungshebel (39) verbunden ist.

10. Baugruppe nach irgendeinem der Ansprüche 1 bis 9, **dadurch gekennzeichnet, dass** die Rückhaltemittel und die Betätigungsmittel fest mit einer Halteplatine (47) verbunden sind, die fest mit dem Trägermasten verbunden ist, und zumindest eine aerodynamische Fläche (49) aufweist.

11. Baugruppe nach Anspruch 10, **dadurch gekennzeichnet, dass** die Halteplatine (47) zumindest einen ausgeformten Schlitz (45) umfasst, um für eine unterdrückte Position der Verriegelungs-/ Entriegelungsvorrichtung zumindest teilweise vom Aktivierungshebel (39) durchquert zu werden.

## Claims

1. An assembly for a turbojet engine, comprising a pylon and a nacelle supported by said pylon and surrounding the turbojet engine so as to define a flow path (51) of a secondary air flow, said nacelle comprising at least one thrust reversal device comprising a one-piece cowl slidably mounted alternately between an operation position and a maintenance position of the nacelle, said assembly comprising at least one locking/unlocking device (30) of the sliding of said cowl, interposed between said pylon and said cowl, said device comprising means for retaining said cowl, said device being movable alternately between an active position enabling an operating mode of the nacelle and an inhibited position enabling a maintaining mode of said nacelle, said assembly being **characterized in that** the locking/unlocking device comprises a switching rocker (36) of the retaining means, said rocker comprising at least one inhibiting lever (37) of the retaining means and at least one activating lever (39) of said retaining means, said levers being mounted on a switching shaft (35) of said device, said inhibiting lever (37) being adapted to be rotated through actuating means directly accessible from the flow path (51) of the secondary air flow when the locking/unlocking device (30) is in active position, and said activating lever (39) being able to be rotated from said path when said device is in the inhibited position.

2. The assembly according to claim 1, **characterized in that** the actuating means comprise at least one push-button/pusher assembly comprising at least one push-button (53) operable directly from the flow path (51) of the secondary air flow when the locking/unlocking device is in the active position so as to interact with at least one pusher (55) secured to the inhibiting lever (37).

3. The assembly according to claim 2, **characterized in that** the push-button/pusher assembly is enclosed at least partially into a guide body (59), and **in that** said assembly is movable in translation along a substantially longitudinal axis of said body.

4. The assembly according to claim 3, **characterized in that** the push-button/pusher assembly comprises position maintaining means comprising at least one spring ball (69) alternately housed in a retaining groove (73) of said guide body (59) for an active position of the locking/unlocking device (30), and in an inhibiting groove (77) of said guide body (59) for an inhibited position of said device.

5. The assembly according to claim 4, **characterized in that** the position maintaining means comprise at least one safety ball (79) housed in a safety groove (80) of said guide body (59) for an active position of the locking/unlocking device.

6. The assembly according to any one of claims 4 or 5, **characterized in that** the position maintaining means comprise elastic means positioned between the push-button (53) and the pusher (55).

7. The assembly according to any one of claims 1 to 6, **characterized in that** the retaining means comprise at least one movable strike (33) able to cooperate with at least one bolt secured to the one-piece cowl for an active position of said device, and to release said bolt for an inhibiting position of said device.

8. The assembly according to any one of claims 1 to 7, **characterized in that** the switching rocker (36) comprises visual checking means representative of the inhibited and active positions of said device, said visual checking means being enclosed inside the pylon for an active position of the locking/unlocking device (30), and at least partially uncovered and accessible from the flow path (51) of the secondary air flow for an inhibited position of said device.

9. The assembly according to claim 8, **characterized in that** the visual checking means comprises a control end (85) secured to the activating lever (39).

10. The assembly according to any one of claims 1 to 9, **characterized in that** the retaining means and the actuating means are secured to a support plate (47) secured to the pylon and having at least one aerodynamic surface (49).

11. The assembly according to claim 10, **characterized in that** the support plate (47) comprises at least one slot (45) shaped to be traversed at least partially by the activating lever (39) for an inhibited position of the locking/unlocking device.
